# DEMANDE DE BREVET EUROPEEN

(11) **EP 4 439 513 A1**
(43) Date de publication de la demande: **02.10.2024**
(21) Numéro de dépôt: 23164969.0
(22) Date de dépôt: 29.03.2023
(51) Int. Cl.: G08B 21/08, H04B 11/00, H04B 13/02

(54) **DISPOSITIF TRANSDUCTEUR D'UN OBJET PORTABLE, ET PROCÉDÉ POUR SA MISE EN ACTION**

(71) Demandeur: The Swatch Group Research and Development Ltd, 2074 Marin (CH)
(72) Inventeur: CASAGRANDE, Arnaud, 2014 Bôle (CH); MIGNOT, Jean-Pierre, 25300 Pontarlier (FR)
(74) Mandataire: ICB SA

(57) **Abrégé**

L'invention propose un dispositif transducteur (10) d'un objet portable (1) ou comme objet portable (1) en tant que tel, qui comprend un moyen pour générer une première action dans un premier mode de fonctionnement liée à une fonction propre de l'objet portable sous la commande d'une unité de traitement à processeur ou à microcontrôleur d'un circuit électronique (7) en étant alimenté par une source de tension continue. Le même moyen est agencé pour générer une seconde action de communication dans un second mode de fonctionnement différent du premier mode de fonctionnement de manière à obtenir un dispositif transducteur à double mode. Le second mode de fonctionnement permet de communiquer principalement vers l'extérieur du dispositif transducteur de l'objet portable des signaux d'information ou de communication de données de manière à pouvoir être détectés par une unité de surveillance d'un système de surveillance et pouvoir établir une communication, et de pouvoir recevoir des signaux de données ou de paramètres d'un autre dispositif transducteur. Les signaux de communication sont des signaux à ultrasons transmis dans un plan d'eau.

## Description

### Domaine technique de l'invention

L'invention se rapporte à un dispositif transducteur d'un objet portable, tel qu'une montre, susceptible d'agir à double mode.

L'invention se rapporte également à un procédé de mise en action du dispositif transducteur.

L'invention se rapporte également à un système de surveillance d'êtres vivants, tels que des personnes ou animaux dans un endroit défini et principalement dans un bassin extérieur ou intérieur au moyen de dispositifs transducteurs à double mode placés chacun dans un objet portable tel qu'une montre, porté par chaque être vivant à surveiller.

Les êtres vivants peuvent être principalement des nageurs ou plongeurs à surveiller lorsqu'ils sont dans l'eau d'une piscine, d'un lac, d'une mer, d'une rivière ou d'un océan.

### Arrière-plan technologique

Il est connu de porter une montre électromécanique ou électronique munie d'un dispositif de signalisation sonore, tel qu'une alarme, pour signaler par au moins un son une heure sélectionnée. L'alarme peut être réalisée à l'aide d'un buzzer, par exemple du type piézoélectrique. Cependant un tel dispositif de signalisation sonore n'est prévu que pour un mode de fonctionnement particulier, qui est dans ce cas de figure une alarme d'une montre.

Le brevet FR 3 029 816 décrit un transducteur ultrasonore tubulaire pour propager des ondes acoustiques dans un milieu fluide. Il comprend un dispositif de conversion électromécanique à éléments actifs associé à au moins un tube métallique pour transmettre les vibrations au milieu fluide, un système de transmission des vibrations entre le dispositif de conversion et le tube et un dispositif de précontrainte des éléments actifs du dispositif de conversion. Un tel transducteur est capable de créer des vibrations radiales et propager des ondes dans des milieux fluides. Il peut être utilisé pour des applications de nettoyage par exemple.

La demande de brevet US 2003/0222782 A1 décrit un système d'alarme pour une piscine qui comprend un mécanisme pour détecter une intrusion dans la piscine et générer une première alarme. Un circuit de minuterie est déclenché par la première alarme pour générer un signal de sortie de dépassement d'un temps prédéterminé écoulé. Le signal de sortie de dépassement d'un temps permet de déclencher une deuxième alarme. Le système comprend encore un mécanisme d'arrêt pour couper la première alarme et la deuxième alarme. La première alarme est une alarme locale destinée à être entendue par des personnes à proximité de la piscine et la seconde alarme est une alarme générale destinée à être entendue par des personnes à l'extérieur. Le système ne comprend pas de dispositif faisant partie d'une montre avec un générateur d'alarme pouvant fonctionner selon deux modes différents.

La demande de brevet CN 105901845 décrit un dispositif à bracelet capable de générer une alarme dans l'eau. Le dispositif comprend un bracelet avec un boîtier, un module d'alarme intégré dans le boîtier et un ballon. Deux cavités sont disposées dans le module d'alarme, dont une cavité est génératrice de gaz; un trou de sortie de gaz est formé dans la cavité génératrice de gaz, une partie d'un bouchon en caoutchouc et une partie du ballon sont placés dans la sortie de gaz, et le bouchon en caoutchouc est disposé sur le bracelet. Rien n'est prévu en ce qui concerne une éventuelle utilisation dans l'élément générateur d'une alarme pouvant être utilisé pour une autre fonction que la génération de l'alarme pour la génération ou réception d'un signal de communication.

### Résumé de l'invention

La présente invention concerne un dispositif transducteur d'un objet portable, qui comprend un moyen pour générer une première action dans un premier mode de fonctionnement et pour générer une seconde action de communication dans un second mode de fonctionnement. La première action générée est principalement liée à une fonction propre de l'objet portable, alors que la seconde action de communication est principalement pour pouvoir communiquer avec une unité de surveillance d'un système de surveillance.

Pour ce faire, il est proposé un dispositif transducteur destiné à être disposé dans un objet portable ou étant un objet portable en tant que tel, qui comprend les caractéristiques de la revendication indépendante 1.

Des formes particulières du dispositif transducteur sont également définies dans des revendications dépendantes 2 à 8.

Le moyen pour générer une première action ou une seconde action dans deux modes différents, est de préférence un générateur pour signaler une alarme à une heure définie dans un premier mode de fonctionnement, et susceptible de pouvoir transmettre ou recevoir des signaux de données dans un second mode de fonctionnement. Il peut s'agir également d'un dispositif de signalisation sonore d'une montre tel qu'un buzzer par exemple de type piézoélectrique. De préférence, le premier mode de fonctionnement est dans une première bande de fréquences de 0 à 20 kHz, alors que le second mode de fonctionnement est dans une seconde bande de fréquences différente de la première bande de fréquence. La seconde bande de fréquences peut être au-dessus de 20 kHz. Dans ces conditions le dispositif transducteur est à double mode ce qui permet de réduire le nombre de composants nécessaires pour effectuer des fonctions différentes.

Comme indiqué ci-dessus, le dispositif transducteur est à double mode, pour pouvoir servir par exemple de générateur d'un signal d'alarme, ou comme dispositif de signalisation sonore, lorsqu'il fait partie d'un objet portable, tel qu'une montre, et en plus pouvoir servir pour la transmission et la réception de signaux à courtes distances ou à grandes distances, lorsqu'il est dans l'objet portable sur ou dans un plan d'eau comme dans une piscine, une rivière, un lac, une mer ou un océan. Dans ces conditions, dans ce second mode de fonctionnement, le dispositif transducteur doit faire partie de l'objet portable ou être l'objet portable en tant que tel, et être en mesure d'être sélectionné ou commuté manuellement ou automatiquement dans le second mode de fonctionnement pour la transmission ou la réception de signaux de données en communication avec au moins une unité de surveillance d'un système de surveillance.

Chaque unité de surveillance du système de surveillance peut être une balise ou bouée balise ou un bateau sur un plan d'eau pour surveiller toute activité notamment de personnes avoisinantes munies d'un dispositif transducteur en tant qu'objet portable ou disposé dans l'objet portable. Chaque unité de surveillance est en mesure de recevoir des signaux d'informations ou de données provenant d'un dispositif transducteur généralement monté dans un objet portable tel qu'une montre. A la réception des signaux d'information ou de données d'un dispositif transducteur d'un objet portable commuté dans un second mode de fonctionnement, le système de surveillance peut être en mesure de fournir d'autres informations en retour par des signaux d'information personnalisés à destination du dispositif transducteur émetteur du premier message. Ces signaux de données sont des signaux à ultrasons, qui sont préférés pour une transmission de tels signaux dans l'eau de manière à pouvoir être détectés par une balise du système de surveillance. Ceci permet d'effectuer une détection de tout dispositif transducteur en fonction dans l'entourage de la balise du système de surveillance s'il est nécessaire de pouvoir détecter un être vivant tel qu'une personne portant la montre munie de ce dispositif transducteur à double mode.

Il peut être imaginé d'utiliser un autre moyen de génération d'un signal dans la montre susceptible de remplir une première fonction dans un premier mode, et d'être utilisé dans un second mode pour effectuer une communication par des signaux de données avec un dispositif de communication distant de la montre. Dans ce cas de figure, on peut imaginer avoir un générateur de vibration dans la montre pour effectuer une vibration à une fréquence déterminée dans un premier mode, et d'utiliser ce générateur de vibration dans un second mode pour effectuer une communication par des signaux de données avec un dispositif de communication distant de la montre.

Le but de la présente invention est effectivement de pouvoir effectuer une transmission d'informations ou une réception d'informations au moyen d'un dispositif transducteur agencé dans un second mode pour transmettre ou recevoir des informations provenant d'une unité de surveillance d'un système de surveillance. Généralement des signaux d'informations sont transmis tout d'abord depuis le dispositif transducteur porté par une personne en activité dans le plan d'eau ou en plongée ou en dehors du plan d'eau. Ces signaux d'informations peuvent concerner des données de signalisation ou de positionnement ou de communication ou données de secours en cas d'urgence.

Dans le cas où le dispositif transducteur faisant partie de l'objet portable tel qu'une montre est en dehors de l'eau, une communication à courte distance dans l'air avec une unité de surveillance est également possible lorsque le dispositif transducteur de la montre est dans le second mode de fonctionnement sélectionné.

Pour ce faire, il est également proposé un procédé de mise en action du dispositif transducteur selon les caractéristiques de la revendication indépendante 9.

Des étapes particulières du procédé de mise en action du dispositif transducteur sont également définies dans les revendications dépendantes 10 à 12.

Pour ce faire il est également proposé un système de surveillance d'au moins un dispositif transducteur d'un objet portable à double mode porté par un être vivant dans un plan d'eau selon les caractéristiques de la revendication indépendante 13.

Des formes particulières du système de surveillance sont définies dans les revendications dépendantes 14 et 15.

### Brève description des figures

Les buts, avantages et caractéristiques du dispositif transducteur d'un objet portable, du procédé de mise en action du dispositif transducteur et du système de surveillance comprenant au moins un dispositif transducteur apparaîtront mieux dans la description suivante de manière non limitative en regard des dessins sur lesquels :

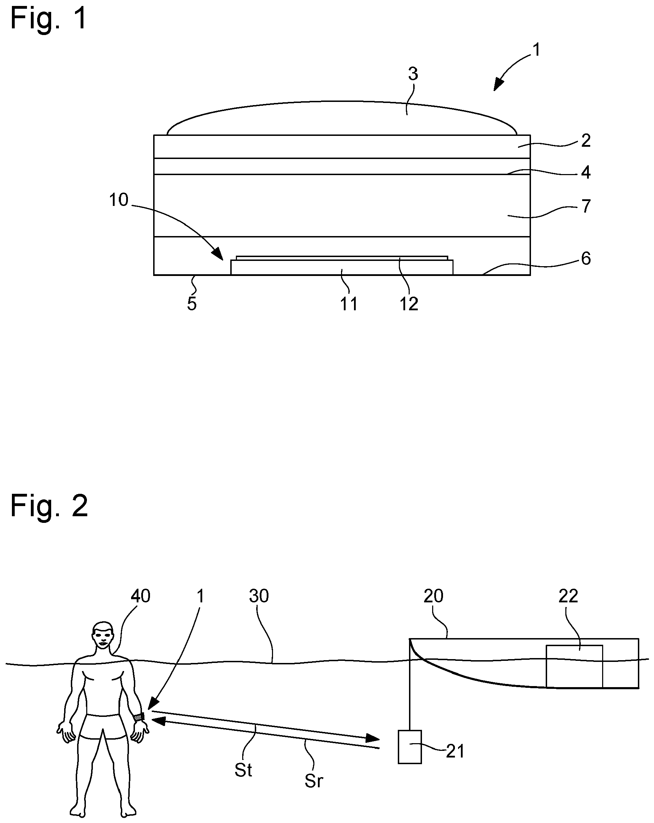

- la figure 1 représente de manière schématisée un objet portable comprenant un dispositif transducteur à double mode selon l'invention, et
- la figure 2 représente un plan d'eau tel qu'un lac ou une piscine avec une ou plusieurs personnes portant chacune un dispositif transducteur disposé généralement dans un objet portable tel qu'une montre, et susceptible d'être commuté manuellement ou automatiquement au contact de l'eau dans le second mode de fonctionnement pour une communication de signaux de données de manière à pouvoir être détecté par au moins une unité de surveillance d'un système de surveillance et établir une communication.

### Description détaillée de l'invention

Dans la description suivante, il est décrit un dispositif transducteur faisant partie d'un objet portable, qui est de préférence une montre bracelet, ou une montre de poche. Cependant, il peut aussi être considéré que le dispositif transducteur est également l'objet portable en tant que tel, avec toute l'électronique adéquate pour les opérations dans un premier mode de fonctionnement et les opérations dans un second mode de fonctionnement.

Dans le cas d'une montre ou pièce d'horlogerie, il est cherché d'utiliser une alarme ou un dispositif de signalisation sonore d'une montre tel qu'un buzzer par exemple de type piézoélectrique. Avec ce dispositif de signalisation sonore, qui est un transducteur, il est prévu dans cette invention de réutiliser ce transducteur pour une autre fonctionnalité qu'uniquement l'alarme de la montre, en prévoyant une utilisation notamment dans une bande de fréquences différentes pour permettre d'optimiser la fonction de transfert du système dans le cas où la montre est plongée dans l'eau par exemple.

De manière générale, il est possible de protéger tout dispositif transducteur d'un objet portable ou comme objet portable en tant que tel, susceptible d'avoir un moyen pouvant fonctionner en double mode. L'objet portable comprend au moins un moyen pour générer une première action dans un premier mode de fonctionnement liée à une fonction propre de l'objet portable sous la commande d'une unité de traitement à processeur ou à microcontrôleur et en étant alimenté par une source de tension continue. Le même moyen est agencé pour générer une seconde action de communication dans un second mode de fonctionnement différent du premier mode de fonctionnement de manière à obtenir un dispositif transducteur à double mode. Le second mode de fonctionnement permet de communiquer principalement vers l'extérieur du dispositif transducteur de l'objet portable des signaux d'information ou de communication de données de manière à pouvoir être détectés par une unité de surveillance d'un système de surveillance, et être en mesure d'établir une communication avec le système de surveillance.

Comme principalement l'objet portable peut être une montre, cette montre est une montre électronique ou électromécanique et elle comprend au moins un circuit électronique avec une base de temps généralement définie par un oscillateur à quartz. La montre comprend encore un circuit électronique avec au moins une unité de traitement à processeur ou à microcontrôleur, et/ou un ensemble de rouages entraînés par un moteur cadencé par la base de temps pour l'avancement des aiguilles de montre ou la visualisation d'une heure sur un cadran numérique comme première fonction de la montre.

. Ladite montre peut comprendre également un moyen qui peut être un dispositif de signalisation sonore ou un générateur de signal d'alarme sonore ou par vibration destiné à être programmé pour générer un son ou une vibration à une heure définie dans le premier mode de fonctionnement.

Comme expliqué par la suite, le générateur de signal d'alarme est défini comme un dispositif transducteur de manière à pouvoir dans un premier mode de fonctionnement générer une alarme à une heure programmée principalement une alarme sonore et dans un second mode de fonctionnement être en mesure de pouvoir transmettre ou recevoir des signaux d'information. Généralement dans le premier mode de fonctionnement, une alarme sonore peut être générée par le dispositif transducteur. Cette alarme sonore est dans une bande de fréquences généralement située en dessous de 20 kHz pour être perçue par une oreille humaine. Par contre dans le second mode de fonctionnement il est prévu de pouvoir transmettre des signaux ultrasonores, qui sont à des fréquences supérieures à 20 kHz et de préférence en dessus de 100 kHz. Bien entendu dans le second mode de fonctionnement il peut être envoyé des signaux d'information acoustiques ou vibratoires à courtes distances dans l'air. Cependant le dispositif transducteur est plus adapté pour une transmission de signaux d'information ultrasonores lorsqu'il est en plongé dans l'eau, car les signaux ultrasonores sont plus facilement détectables dans l'eau que d'autres signaux d'informations tels que des signaux radiofréquences. De plus, il est constaté que la propagation des signaux d'information ultrasoniques à relativement basse fréquence présente une faible atténuation, mais il est recommandé d'étaler l'information à transmettre sur un spectre de fréquences large de manière à garantir un transfert sous l'eau quelle que soit l'orientation de l'objet portable tel qu'une montre sous l'eau.

Il peut être effectué une modulation des signaux dans le second mode de fonctionnement pour une transmission de données de manière à être captée par au moins une unité de surveillance d'un système de surveillance. La modulation des signaux peut être effectuée par modulation de fréquences, voire par modulation de phases.

Il a été testé une telle utilisation d'un système de surveillance dans l'eau. Les transducteurs piézo-acoustiques standards fonctionnent généralement en utilisant la partie inférieure de la montre comme un radiateur de vibration. Le transducteur piézoélectrique est généralement collé sur une surface intérieure du fond de la boîte de montre et est exploité avec deux électrodes orthogonales au fond de la boîte de montre reliées à une unité de traitement ou à une unité à microcontrôleur. Elles sont de préférence montées pour avoir directement leur transducteur piézoélectrique (largeur typique de 100 µm) déposé sur une mince feuille métallique.

La figure 1 illustre la structure standard de l'objet portable 1, qui est dans ce cas de figure une montre sonique. Comme le volume du matériau piézoélectrique est maintenu constant, la dilatation le long de l'axe d'épaisseur impose une variation correspondante de la taille des plans, qui la force pour plier la surface inférieure 6 du fond 5 de la montre 1. Il existe différents types de constructions mécaniques, utilisant soit des géométries très simples (dispositif piézo) ou simplement collé sur le fond de la boîte de montre ou des approches plus sophistiquées, basées sur la cavité Helmholtz, qui tendent à augmenter la fonction de transfert à la pression d'air, ou à élargir la bande passante correspondante.

Quoi qu'il en soit, une grande préoccupation est l'orientation du système, qui devrait rester aussi faible que possible dans certains cas, comme par exemple lorsqu'il est essayé d'établir une communication entre les montres intelligentes sous-marines ou essayer de les détecter ou de les localiser.

La figure 1 représente de manière simplifiée un objet portable 1 dans lequel est disposé un dispositif transducteur 10 pouvant fonctionner à double mode selon l'invention. De préférence, l'objet portable 1 est une montre du type montre-bracelet électronique ou électromécanique. Par simplification à la figure 1, il n'est représenté que le boîtier de la montre 1 dans lequel sont disposés les différents éléments cités ci-après, mais sans représenter un bracelet, qui permet de placer la montre au poignet ou patte d'un être vivant. Bien entendu, il ne sera fait référence qu'à une personne en tant qu'être vivant, car la montre du type montre-bracelet est de préférence destinée à être montée au poignet d'une personne, qui peut être surveillée.

Dans le boîtier de montre 1, on peut remarquer sur le dessus un verre 3 de montre qui est généralement transparent de manière à regarder l'heure affichée sur un cadran 4 de montre au moyen d'aiguilles d'indication de l'heure ou également sur un tableau numérique d'indication de l'heure. Le contrôle et l'action dans un premier mode de fonctionnement est contrôlé par une unité de traitement, telle qu'une unité à microcontrôleur, cadencée par un oscillateur à quartz définissant une base de temps généralement de la montre. Toute la partie électronique ou électromécanique 7 de ladite montre se trouve généralement enfermée sous le cadran de montre dans la carrure 2 généralement cylindrique de ladite montre et au-dessus du fond 5 de la boîte de montre fixé de manière étanche à la carrure 2 de la boîte de montre.

Il est également représenté dans la boîte de montre un dispositif transducteur 10 monté sur une surface intérieure 6 du fond 5 de la boîte de montre. Ce dispositif transducteur 10 peut comprendre dans le cas d'un générateur de signal d'alarme dans un premier mode de fonctionnement, une alarme comprenant un élément piézoélectrique 11 qui peut être connecté et contrôlé par une connexion électrique d'électrodes 12 sur le dessus du dispositif transducteur 10 à l'unité à microcontrôleur dans le circuit électronique.

Bien entendu, il peut s'agir de tout autre moyen faisant partie de l'objet portable. On peut citer à ce titre un générateur de vibrations, qui peut agir également comme générateur de signal d'alarme en générant une vibration obtenue par un vibreur alimenté électriquement. Dans ce cas de figure, à une commande de sélection du second mode de fonctionnement, le dispositif transducteur ou l'objet comprenant le dispositif transducteur peut transmettre dans un second mode de fonctionnement des vibrations dans une bande de fréquences déterminées en fonction du second mode de fonctionnement. De manière à pouvoir utiliser le moyen générateur de vibrations, il peut être prévu d'effectuer une commutation du premier mode de fonctionnement au second mode de fonctionnement de manière automatique ou de manière manuelle par l'action d'un commutateur traditionnel disposé dans la boîte de montre et actionnable depuis l'extérieur de la boîte de montre. Une fois le mode de fonctionnement sélectionné, du premier mode de fonctionnement au second mode de fonctionnement ou inversement, l'objet portable de préférence la montre à dispositif transducteur double mode peut être également programmé pour passer d'un second mode de fonctionnement sélectionné à un premier mode de fonctionnement propre à l'objet portable comprenant le dispositif transducteur.

De préférence, il sera utilisé comme dispositif transducteur 10, un générateur de signaux acoustiques pour générer un signal d'alarme dans une montre 1 traditionnelle dans un premier mode de fonctionnement. Un passage dans un second mode de fonctionnement du dispositif transducteur 10 peut être effectué de manière automatique par une détection d'eau par la montre 1 munie du dispositif transducteur, notamment lors d'une plongée d'une personne portant ladite montre. Dans le second mode de fonctionnement, le dispositif transducteur 10 en liaison avec une unité à microcontrôleur de la montre 1, est en mesure de transmettre des signaux ultrasonores de données à intervalles réguliers ou modification de ces intervalles réguliers de signaux ultrasonores dans une seconde bande de fréquences et de manière à transmettre dans ces signaux ultrasonores des données personnelles de la personne portant ledit dispositif transducteur, qui est intégré dans l'objet portable tel que dans la montre qu'il porte.

Dans ce cas de figure, il peut être déterminé la meilleure orientation possible du dispositif transducteur 10 intégré dans l'objet portable 1, tel que dans le boîtier de la montre pour effectuer une transmission de signaux ultrasonores susceptibles d'être captés par une balise dans un système de surveillance détectant tout signal de données ultrasonore susceptibles d'être captés par une telle balise du système de surveillance. Le dispositif transducteur 10 peut être disposé aussi au niveau du cadran 4, par exemple juste au-dessous du cadran 4 ou en partie intégré au cadran 4.

Le système de surveillance est représenté de manière schématique à la figure 2. Le système de surveillance est généralement prévu pour détecter par exemple toute personne 40 portant un objet portable 1 à dispositif transducteur, qui se trouve dans un plan d'eau 30. Pour ce faire, le système de surveillance comprend au moins une unité de surveillance 21 sous la forme d'une balise ou bouée balise disposée dans l'eau. L'unité de surveillance 21 peut être reliée à une unité de base 22 du système de surveillance, qui est disposée dans ce cas de figure dans un bateau 20 sur le plan d'eau 30. L'unité de surveillance 21 peut être reliée à l'unité de base 22 par exemple par une connexion filaire. Il peut bien évidemment être prévu d'avoir plusieurs unités de surveillance 21 sous la forme de bouées balises pour une détection de toute personne 40 portant un dispositif transducteur dans un objet portable 1 tel qu'une montre, dans le plan d'eau 30 et de préférence pour détecter à plus grandes distances un ou plusieurs plongeurs 40 portant chacun un dispositif transducteur personnalisé d'un objet portable 1 qui est avantageusement une montre.

Comme expliqué ci-dessus, le dispositif transducteur peut passer du premier mode de fonctionnement au second mode de fonctionnement de manière automatique par une détection d'eau de l'objet portable 1 muni du dispositif transducteur de l'objet portable, ou manuelle par action sur un interrupteur ou commutateur de l'objet portable 1. Une fois que le passage dans le second mode de fonctionnement a été effectué, l'objet portable 1 qui est de préférence une montre est en mesure de transmettre des signaux ultrasonores d'information de données St dans une seconde bande de fréquences, par exemple dans une bande de fréquences entre 150 kHz et 250 kHz. Les données ou informations à transmettre sont modulées par une modulation de fréquences à ± 50 kHz ou par une modulation de phases. La bouée balise, qui est l'unité de surveillance 21 peut capter les signaux ultrasonores d'information St transmis par au moins un dispositif transducteur d'un objet portable 1. Dès la détection des signaux ultrasonores St, le système de surveillance est capable de générer une réponse avec des signaux ultrasonores de réponse Sr à destination du dispositif transducteur de l'objet portable émetteur des premiers signaux ultrasonores St pour établir une communication avec l'objet portable personnalisé 1. Cependant, les signaux ultrasonores de réponse Sr peuvent être transmis par le système de surveillance à tout dispositif transducteur d'un objet portable personnalisé 1 dans le plan d'eau 30 et dans le second mode de fonctionnement.

Il est à noter qu'il est possible de contrôler ou de détecter un grand nombre de dispositifs transducteurs de tout objet portable 1 porté par les plongeurs ou nageurs dans le plan d'eau 30 à contrôler, notamment dans le second mode de fonctionnement du dispositif transducteur.

Le système de surveillance peut comprendre plusieurs unités de surveillance 21 reliées à une unité de base 22 disposée sur un bateau 20 flottant sur un plan d'eau 30. Il peut également être prévu d'avoir plusieurs bateaux 20 distants les uns des autres et chacun avec au moins une unité de surveillance 21. Généralement, chaque unité de surveillance peut contrôler indépendamment de l'unité de base la réception de signaux ultrasonores et la transmission de signaux ultrasonores à destination d'au moins un dispositif transducteur d'un objet portable 1.

Le système de surveillance peut aussi comprendre les objets portables 1 à dispositif transducteur à détecter.

Il peut aussi être envisagé d'utiliser un système de surveillance dans une piscine de manière à contrôler tous les nageurs dans la piscine principalement. Dans ce cas de figure, il peut être imaginé de placer quatre unités de surveillance aux quatre coins du bassin de la piscine de manière à être liés à une unité de base de gestion de tous les signaux provenant des unités de surveillance.

Bien entendu, on doit également comprendre que dans le système de surveillance, il est possible d'utiliser le deuxième mode pour recevoir des données d'autres montres ou dispositifs immergés dans le plan d'eau. Il peut dans ce cas s'agir d'alarmes aux nageurs, de communications entre différentes montres immergées ou entre des dispositifs immergés. Il peut encore être prévu une communication de divers paramètres.

Plusieurs variantes de réalisation du dispositif transducteur d'un objet portable, tel qu'une montre, peuvent être conçues dans l'étendue de protection conférée par les revendications.

## Revendications

1. Dispositif transducteur (10) d'un objet portable (1) ou comme objet portable (1) en tant que tel, comprenant un moyen pour générer une première action dans un premier mode de fonctionnement liée à une fonction propre de l'objet portable sous la commande d'une unité de traitement à processeur ou à microcontrôleur d'un circuit électronique (7) en étant alimenté par une source de tension continue, **caractérisé en ce que** le même moyen est agencé pour générer une seconde action de communication dans un second mode de fonctionnement différent du premier mode de fonctionnement de manière à obtenir un dispositif transducteur à double mode, le second mode de fonctionnement permettant de communiquer principalement vers l'extérieur du dispositif transducteur de l'objet portable des signaux d'information ou de communication de données de manière à pouvoir être détectés par une unité de surveillance (21) d'un système de surveillance, et de pouvoir recevoir des signaux de données ou de paramètres d'un autre dispositif transducteur.

2. Dispositif transducteur (10) selon la revendication 1, **caractérisé en ce que** le moyen pour générer une première action ou une seconde action est un générateur de signal d'alarme, utilisé dans un premier mode de fonctionnement pour la programmation d'une alarme dans un délai prédéfini ou un dispositif de signalisation sonore, et contrôlé par l'unité de traitement à processeur ou à microcontrôleur.

3. Dispositif transducteur (10) selon la revendication 2, **caractérisé en ce que** le générateur de signal d'alarme est configuré pour générer des signaux acoustiques dans le délai prédéfini dans le premier mode de fonctionnement, alors que dans le second mode de fonctionnement, le générateur est configuré pour générer des signaux ultrasonores.

4. Dispositif transducteur (10) selon la revendication 2, **caractérisé en ce que** le générateur de signal d'alarme comprend un élément piézoélectrique (11) qui est connecté et contrôlé par une connexion électrique d'électrodes (12) liées au circuit électronique (7).

5. Dispositif transducteur (10) selon la revendication 2, **caractérisé en ce que** le générateur de signal d'alarme est configuré pour générer des signaux vibratoires dans le délai prédéfini dans le premier mode de fonctionnement.

6. Dispositif transducteur (10) selon l'une des revendications 3 et 4, **caractérisé en ce que** le dispositif transducteur fait partie d'un objet portable qui est une montre-bracelet (1) ou une montre de poche de type électronique ou électromécanique, **en ce que** la montre (1) comprend un oscillateur à quartz pour définir une base de temps et un circuit électronique (7) avec l'unité de traitement à processeur ou à microcontrôleur, **en ce que** le générateur de signal d'alarme est configuré pour générer des signaux acoustiques dans le délai prédéfini dans le premier mode de fonctionnement, et **en ce que** dans le second mode de fonctionnement différent du premier mode de fonctionnement, le générateur est configuré pour générer des signaux ultrasonores pour une transmission de signaux d'information ou de données ultrasonores dans l'eau de manière à être détectés par une unité de surveillance (21) dans un plan d'eau (30) d'un système de surveillance et établir une communication de données par des signaux ultrasonores.

7. Dispositif transducteur (10) selon la revendication 6, **caractérisé en ce que** dans le premier mode de fonctionnement, le générateur est configuré pour générer des signaux acoustiques dans une première bande de fréquences de 0 à 20 kHz, alors que dans le second mode de fonctionnement, le générateur est configuré pour générer des signaux ultrasonores dans une seconde bande de fréquences différente et supérieure à la première bande de fréquences.

8. Dispositif transducteur (10) selon l'une des revendications 6 et 7, **caractérisé en ce qu'**il est configuré pour passer automatiquement du premier mode de fonctionnement au second mode de fonctionnement lorsque la montre est sous l'eau.

9. Procédé de mise en action du dispositif transducteur (10) d'un objet portable (1) selon l'une des revendications précédentes, pour lequel il est prévu un moyen générant une première action dans un premier mode de fonctionnement liée à une fonction propre de l'objet portable sous la commande d'une unité de traitement à processeur ou à microcontrôleur d'un circuit électronique (7) en étant alimenté par une source de tension continue, **caractérisé en ce que** le même moyen génère une seconde action de communication dans un second mode de fonctionnement différent du premier mode de fonctionnement de manière à obtenir un dispositif transducteur à double mode, quand le second mode de fonctionnement est activé, une communication de signaux d'information ou de données est effectuée vers l'extérieur du dispositif transducteur de l'objet portable pour être détectés par une unité de surveillance (21) d'un système de surveillance.

10. Procédé selon la revendication 9, pour lequel le dispositif transducteur (10) fait partie d'un objet portable qui est une montre-bracelet (1) ou une montre de poche de type électronique ou électromécanique, la montre (1) comprenant un oscillateur à quartz pour définir une base de temps et un circuit électronique (7) avec l'unité de traitement à processeur ou à microcontrôleur, et pour lequel le moyen pour générer une première action ou une seconde action est un générateur de signal d'alarme, qui comprend un élément piézoélectrique (11) qui est connecté et contrôlé par une connexion électrique d'électrodes (12) liées au circuit électronique (7), **caractérisé en ce que** le générateur de signal d'alarme génère des signaux acoustiques dans un délai prédéfini dans le premier mode de fonctionnement, et **en ce que** dans le second mode de fonctionnement différent du premier mode de fonctionnement, le générateur génère des signaux ultrasonores pour une transmission de signaux d'information ou de données ultrasonores dans l'eau pour être détectés par une unité de surveillance (21) dans un plan d'eau (30) d'un système de surveillance et établir une communication de données par des signaux ultrasonores.

11. Procédé selon la revendication 10, **caractérisé en ce que** dans le premier mode de fonctionnement, le générateur génère des signaux acoustiques dans une première bande de fréquences de 0 à 20 kHz, alors que dans le second mode de fonctionnement, le générateur génère des signaux ultrasonores dans une seconde bande de fréquences différente et supérieure à la première bande de fréquences.

12. Procédé selon la revendication 10, **caractérisé en ce qu'**un passage automatique du premier mode de fonctionnement au second mode de fonctionnement intervient quand la montre (1) avec le dispositif transducteur (10) entre dans l'eau d'un plan d'eau (30).

13. Système de surveillance d'un être vivant (40) muni d'un objet portable (1) à dispositif transducteur (10) selon l'une des revendications 3 à 8, **caractérisé en ce qu'**un générateur de signal d'alarme du dispositif transducteur (10) est configuré pour générer des signaux acoustiques dans un délai prédéfini dans le premier mode de fonctionnement, alors que dans le second mode de fonctionnement, le générateur est configuré pour générer des signaux ultrasonores susceptibles d'être détectés par au moins une unité de surveillance dans l'eau d'un plan d'eau (30).

14. Système de surveillance selon la revendication 13, **caractérisé en ce qu'**il comprend au moins une unité de surveillance (21) disposée dans l'eau d'un plan d'eau (30), et en étant reliée par voie filaire à une unité de bas (22) sur un bateau (20) sur le plan d'eau (30).

15. Système de surveillance selon la revendication 13, **caractérisé en ce qu'**il est agencé pour communiquer par des signaux à ultrasons dans le plan d'eau (30) par au moins une unité de surveillance (21) avec tout dispositif transducteur (10) d'objet portable (1) détecté.
